# EUROPEAN PATENT APPLICATION

(11) **EP 2 381 676 A2**
(43) Date of publication of application: **26.10.2011**
(21) Application number: 10194504.6
(22) Date of filing: 10.12.2010
(51) Int. Cl.: H04N 5/44, H04N 5/50

(54) **Broadcast receiving apparatus and broadcast receiving method**

(30) Priority: 31.03.2010 JP 2010084348
(71) Applicant: Kabushiki Kaisha Toshiba, Tokyo (JP)
(72) Inventor: Takashima, Tadao, Tokyo (JP)
(74) Representative: HOFFMANN EITLE

(57) **Abstract**

According to one embodiment, a broadcast receiving apparatus includes first to third broadcast wave processors, a decoder and a controller. The first to third processors are configured to process broadcast waves of different channels, respectively. The decoder is configured to decode video and audio information related to the broadcast wave processed by one of the first to third processors. The controller is configured to control the first to third processors to operate in a cooperative mode in which the first processor processes a broadcast wave of a first channel and the decoder decodes video and audio information of the first channel, while the second processor processes a broadcast wave of a second channel that is subsequent to the first channel in a certain channel order and the third processor processes a broadcast wave of a third channel that is prior to the first channel in the certain channel order.

## Description

### Field

Embodiments described herein relate generally to a broadcast receiving apparatus and a broadcast receiving method for receiving the broadcast of a selected channel.

### Background

In recent years, a broadcast receiving apparatus provided with multiple tuners and demodulators for reception and demodulation of broadcast waves has become widespread. This broadcast receiving apparatus is typically provided with a decoder used for decoding the video and audio information extracted from broadcast waves.

With the digitization of broadcasted information, processings such as demodulation and decoding of received broadcast waves sometimes require a time. For example, when the user of the broadcast receiving apparatus switches the channel, it takes time to output the video and audio information of the switched channel. That is, in switching the channel of digital broadcasting, quick response to the output of the video and audio signals is required.

### BRIEF DESCRIPTION OF THE SEVERAL VIEWS OF THE DRAWINGS

A general configuration that implements the various features of the invention will be described with reference to the drawings. The drawings and the associated descriptions are provided to illustrate embodiments of the invention and not to limit the scope of the invention.
FIG. 1 is an exemplary block diagram showing a configuration of a television receiver as a broadcast receiving apparatus according to an embodiment;
FIG. 2 is an exemplary view showing a remote controller provided with multiple keys;
FIG. 3 is an exemplary structural view of a system including blocks that are provided in a signal processor and execute channel selection control processing; and
FIG. 4 is an exemplary schematic view showing a concrete example of the channel on which broadcast wave processors A, B and C execute a processing such as channel selection.

### DETAILED DESCRIPTION

In general, according to one embodiment, a broadcast receiving apparatus includes first to third broadcast wave processors, a decoder and a controller. The first broadcast wave processor is configured to process a broadcast wave of a channel. The second broadcast wave processor is configured to process a broadcast wave of a channel different from the channel of the first broadcast wave processor. The third broadcast wave processor is configured to process a broadcast wave of a channel different from the channels of the first and second broadcast wave processors. The decoder is configured to decode video and audio information related to the broadcast wave processed by one of the first to third broadcast wave processors. The controller is configured to control the first to third broadcast wave processors to operate in a cooperative mode in which the first broadcast wave processor processes a broadcast wave of a first channel and the decoder decodes video and audio information of the first channel processed by the first broadcast wave processor, while the second broadcast wave processor processes a broadcast wave of a second channel that is subsequent to the first channel in a certain channel order, and while the third broadcast wave processor processes a broadcast wave of a third channel that is prior to the first channel in the certain channel order.

Hereinafter, an exemplary embodiment will be described by using the drawings.

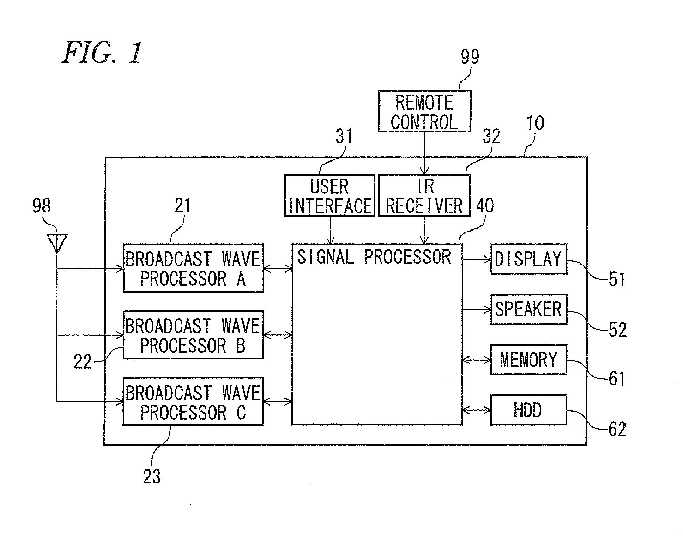

FIG. 1 is an exemplary block diagram showing a configuration of a television receiver 10 as a broadcast receiving apparatus according to the embodiment.

The television receiver 10 according to the present embodiment includes three broadcast wave processors A21, B22 and C23, a user interface 31, an IR receiver 32, a signal processor 40, a display 51, a speaker 52, a memory 61 and an HDD 62. An antenna 98 is connected to the broadcast wave processors A21, B22 and C23. A remote control (hereinafter, referred to as RC) 99 transmits a signal to the IR receiver 32. The RC 99 is a remote control device using infrared rays or radio signal to transmit signals for controlling the television receiver 10.

Based on the channel number of a channel that is selected, on multiple different channels including this channel, the television receiver 10 according to the present embodiment executes a processing such as channel selection in parallel by using multiple broadcast wave processors. Moreover, the television receiver 10 executes a certain processing on the information broadcasted on the channel that is selected, included in the multiple channels. Since the television receiver 10 according to the present embodiment executes such a processing, the information broadcasted on a specific channel can be outputted in a short time by a smaller number of hardware resources.

The broadcast wave processors A21, B22 and C23 are each a functional block that executes the same processing. The broadcast wave processors A21, B22 and C23 are provided with a tuner and a demodulator for digital terrestrial broadcast waves. These broadcast wave processors A21, B22 and C23 receive the reception signal received by the antenna 98, and execute channel selection processing on the specific channels, demodulation processing and the like on the reception signal. Then, the broadcast wave processors A21, B22 and C23 output a transport stream signal (hereinafter, referred to as TS signal) obtained by executing these processings and containing program-related information such as the video and audio information and title of a program, to the signal processor 40. The broadcast wave processors A21, B22 and C23 execute channel selection processing on the specific channels and the like independently of one another. The broadcast wave processors A21, B22 and C23 may be functional blocks not for digital terrestrial broadcasting but for digital satellite broadcasting.

The user interface 31 has multiple operation keys, and outputs operation information responsive to each of the operation keys to the signal processor 40. Likewise, the IR receiver 32 receives the signal transmitted from the RC 99, and outputs the operation information responsive to the received signal to the signal processor 40. The operation key 31 and/or the RC 99 is provided with multiple operation keys including a channel up key and a channel down key for switching the channel to be selected in ascending or descending order based on a certain order.

The signal processor 40 executes multiple processings by using blocks provided in the signal processor 40 and blocks connected to the signal processor 40. For example, the signal processor 40 selects the input of the TS signal from any of the input sources such as the broadcast wave processors A21, B22 and C23 according to the operation information from the user interface 31 or the RC 99 through the IR receiver 32. Moreover, the signal processor 40 executes decoding processing on the TS signal inputted from the selected input source, and outputs the video information and the audio information to the display 51 and to the speaker 52, respectively. Further, the signal processor 40 executes format conversion processing for recording on the TS signal inputted from the selected input source, and stores the information obtained by executing the processing, onto the HDD 62.

In the present embodiment, the signal processor 40 determines the channel number to be processed by each of the broadcast wave processors A21, B22 and C23 with reference to the information stored in the memory 61 based on the channel number of the channel that is selected. An instruction to execute the processing on the determined channel number is provided from the signal processor 40 to each of the broadcast wave processors A21, B22 and C23. Moreover, the signal processor 40 selects on which of the TS signals inputted from the broadcast wave processors A21, B22 and C23 the processing for output or recording is executed.

The display 51 is a display module including a display panel that displays the video signals inputted from the signal processor 40. As the display 51, a thin flat panel display such as an LCD (liquid crystal display) or a PDP (plasma display panel) is applicable. In the present embodiment, the display 51 displays, in a short time, the video signal of a specific channel decoded by the signal processor 40.

The speaker 52 outputs the audio signal inputted from the signal processor 40. As the speaker 52, two speakers for right and left channels and further, a subwoofer for outputting low tones of the inputted audio signal may be provided.

The memory 61 is a nonvolatile memory capable of storing information even when no power is supplied. The memory 61 stores the program data executed by the signal processor 40. Moreover, the memory 61 stores channel order information, representative of the channel switching order of multiple receivable channels, for responding to a certain operation.

The HDD 62 is a drive device that executes the processing of reading or writing information requested by the signal processor 40, on the hard disk which is a storage medium. The HDD 62 stores information having undergone format conversion processing for recording and outputted from the signal processor 40. The HDD 62 may be an SSD (solid state drive) that executes the processing of reading or writing information from or onto a semiconductor device which is a storage medium, instead of a drive device using a hard disk. Moreover, the HDD 62 may be provided outside the television receiver 10.

The television receiver 10 may be provided with another block as well as the above-described multiple blocks.

For example, the television receiver 10 may have an information extracting module that extracts necessary information from a signal, conforming to the standard of a certain format, received from the outside of the television receiver 10 and be provided with a block (not shown) that executes the function of an interface with the outside. The certain format is the HDMI (trademark) standard, the USB standard, the IEEE 1394 standard or the like. This block outputs, to the signal processor 40, the TS signal extracted from the information received from external devices connected through connection terminals conforming to these standards and storage media such as an HDD and a memory card. The signal processor 40 may select, as an input source, the TS signal inputted from this block.

Moreover, the television receiver 10 may be provided with a network communication function realizing block (not shown) having a communication processor that performs communication through a network such as a LAN or a WAN. This block receives information including the video and audio information and content-related information on contents from an information provision source such as a specific server or a recording medium on the connected network, and outputs a TS signal based on this information to the signal processor 40. The signal processor 40 may select, as an input source, the TS signal inputted from this block.

The present embodiment is an embodiment in which the television receiver 10 is an example of the broadcast receiving apparatus. However, the present embodiment may be applied to an apparatus such as a personal computer, a portable mobile terminal, an HDD/optical disk recorder or a set-top box. That is, embodiments are not limited in items such as the broadcast wave type and the signal obtaining path but are merely necessarily broadcast receiving apparatuses having multiple components that process the broadcast waves of a specific channel and one component that executes the processing for outputting the video and audio signals.

With this configuration, the multiple blocks provided in the television receiver 10 according to the embodiment process multiple different channels including a selected channel in parallel based on the channel number of the selected channel. Moreover, certain processings are executed on the information broadcasted on the selected channel included in the multiple channels. Consequently, the television receiver 10 can output the information broadcasted on a specific channel in a short time by a smaller number of hardware resources. These processings are realized by mainly the signal processor 40 executing multiple processings.

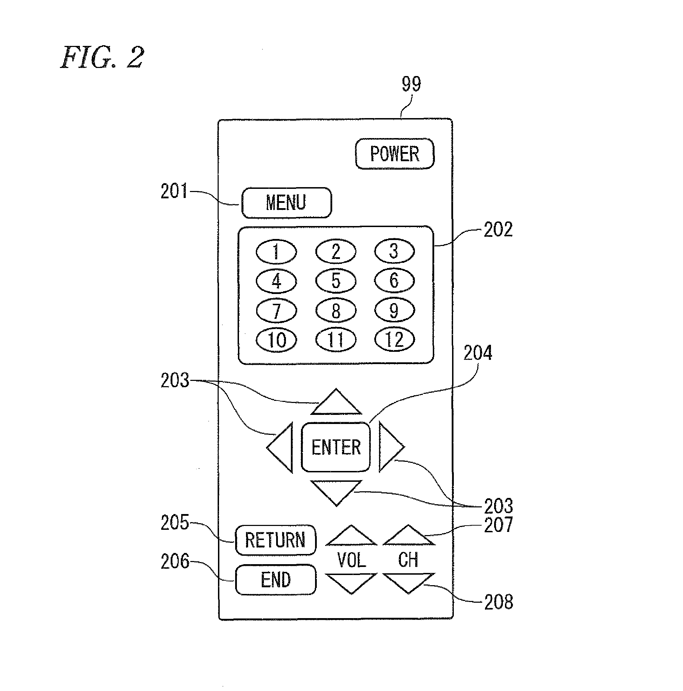

Next, multiple keys provided on the RC 99 that transmits signals to the IR receiver 32 described with reference to FIG. 1 will be described by using FIG. 2.

FIG. 2 is a view showing the RC 99 provided with multiple keys each associated with a signal to be transmitted.

The user of the television receiver 10 operates the television receiver 10 by pressing a specific key provided on the RC 99 to cause the RC 99 to transmit the signal associated with the pressed key. The RC 99 transmits a wireless signal using infrared rays or the like to the television receiver 10.

A menu key 201 is a key to display and erase a menu screen for performing various settings and operations on the television receiver 10 on and from the display 51. For example, on the menu screen, multiple items including an item to display a channel setting screen for setting which broadcasting station is assigned to the channel number switched by an operation by the RC 99 are selectably presented.

Numeric keys of "1" to "12" of a channel selection key 202 are each a key to select a specific channel. It is possible to associate a specific channel number or no channel number with each numeric key.

Direction keys 203 are keys to move a focus mark indicating that a specific item is a candidate for selection on the menu screen or on the channel setting screen by highlighting this item.

An enter key 204 is a key to enter the selection of the item indicated as a candidate for selection by the focus mark on the menu screen or on the channel setting screen.

A return key 205 and an end key 206 are keys to erase the displayed menu screen or channel setting screen.

A channel up key 207 is a key to switch from the currently selected channel to a newly selected channel in ascending order based on a certain order. A channel down key 208 is a key to switch from the currently selected channel to a newly selected channel in descending order based on a certain order.

The order of switching by the channel up key 207 and the channel down key 208 is set, for example, by applying the order of the channel numbers of receivable channels obtained by performing channel scanning. The channel numbers of receivable channels that are set so as to be skipped in the channel switching are skipped and not selected in the channel switching by the channel up key 207 and the channel down key 208. The channel switching order that is set as described above is stored in the memory 61 as channel order information.

The RC 99 may be provided with further multiple keys in addition to the above-described multiple keys. Moreover, the user interface 31 may be provided with keys to perform operations similar to the operations by the keys provided on the RC 99.

That is, the user of the television receiver 10 can operate the television receiver 10 so as to execute multiple processings such as the selection of a specific channel and the assignment of a broadcasting station to a channel number by pressing a specific key provided on the RC 99.

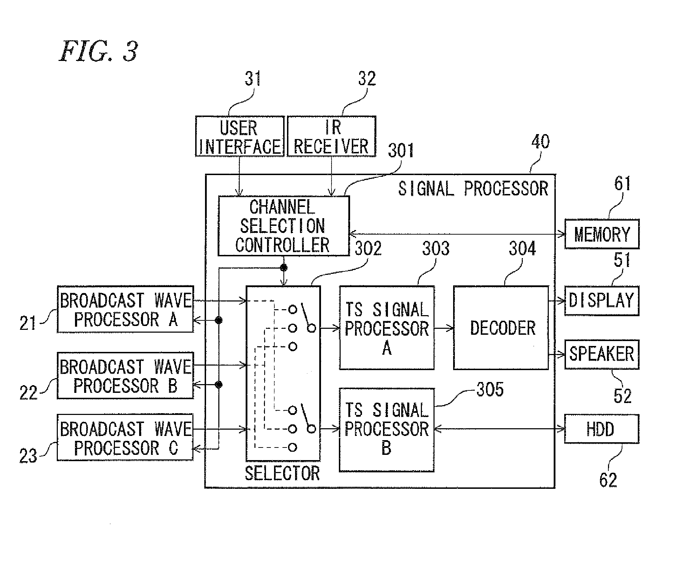

Next, the configuration of the blocks that are provided in the signal processor 40 described with reference to FIG. 1 and execute the channel selection control processing of determining multiple channels on which channel selection and the like are executed and a channel on which a certain processing is executed, based on the selected channel number will be described by using FIG. 3.

FIG. 3 is a structural view of a system including the blocks that are provided in the signal processor 40 and execute the channel selection control processing of determining multiple channels on which channel selection and the like are executed and a channel on which a certain processing is executed, based on the selected channel number.

In the television receiver 10 according to the present embodiment, the video and audio signals based on the TS signal from one of the broadcast wave processors A21, B22 and C23 can be outputted to the display 51 and the speaker 52, and the video and audio signals based on the TS signals from the other two broadcast wave processors can be recorded onto the HDD 62. However, the channel selection control processing according to the present embodiment is executed in a case where the video and audio signals based on the TS signal from any of the broadcast wave processors A21, B22 and C23 can be outputted to the display 51 and the speaker 52 when recording onto the HDD 62 is not performed.

The signal processor 40 is provided with a channel selection controller 301, a selector 302, a TS signal processor A303, a decoder 304, a TS signal processor B305.

The channel selection controller 301 determines multiple channels on which the broadcast wave processors A21, B22 and C23 execute the channel selection processing and the like in parallel, according to the operation information inputted from the user interface 31 or the IR receiver 32 and representing that channel switching is made. These multiple channels are determined by the channel selection controller 301 referring to the channel order information stored in the memory 61. The channel selection controller 301 controls the broadcast wave processors A21, B22 and C23 so as to process the determined channels in parallel. Further, the channel selection controller 301 controls the selector 302 so as to select which of the TS signals inputted from the broadcast wave processors A21, B22 and C23 is outputted to the TS signal processor A303 and the TS signal processor B305.

In response to the control by the channel selection controller 301, the selector 302 selects which of the TS signals inputted from the broadcast wave processors A21, B22 and C23 is outputted to the TS signal processor A303 and the TS signal processor B305, and switches the TS signal. The TS signal outputted to each of the TS signal processor A303 and the TS signal processor B305 is independently selected. That is, there are cases where the TS signal from the same one of the broadcast wave processors A21, B22 and C23 is outputted to the TS signal processor A303 and the TS signal processor B305 and cases where the TS signals from different blocks are outputted thereto. When the channel selection control processing is executed, the selector 302 does not output the TS signal from any of the broadcast wave processors A21, B22 and C23, to the TS signal processor B305.

The TS signal processor A303 separates video information and audio information from the TS signal inputted from the selector 302, and outputs the separated video information and audio information to the decoder 304.

The decoder 304 decodes the video information or the audio information inputted from the TS signal processor A3 03 by executing a certain processing thereon. Then, the decoder 304 outputs the decoded video signal and the decoded audio signal to the display 51 and to the speaker 52, respectively. The decoder 304 outputs the video signal and the audio signal decoded based on the MPEG format, to the display 51 and the speaker 52.

The TS signal processor B305 executes a certain processing necessary for separating multiple pieces of information including video information and audio information from the TS signal inputted from the selector 302 and storing the separated pieces of information onto the HDD 62. The TS signal processor B305 stores information having undergone the certain processing onto the HDD 62. The TS signal processor B305 may receive the multiple pieces of information separated by the TS signal processor A303 and execute the certain processing necessary for storage thereon without performing the separation of the TS signal.

That is, with the system configuration including these multiple blocks, the signal processor 40 controls the broadcast wave processors A21, B22 and C23, based on the channel number of the channel that is selected, so as to process multiple different channels including this channel in parallel. Moreover, the signal processor 40 executes a certain processing on the information broadcasted on the selected channel included in the multiple channels. Consequently, the television receiver 10 can output the information broadcasted on a specific channel in a short time by a smaller number of hardware resources.

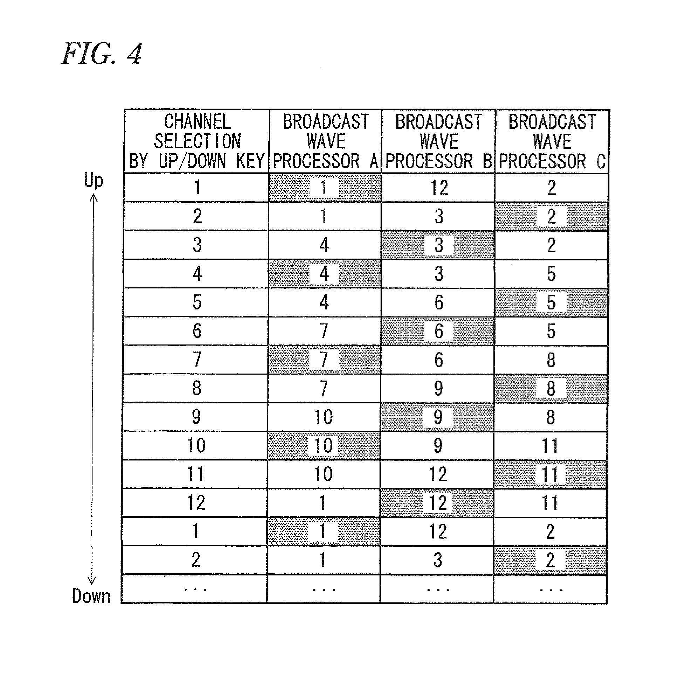

Next, a concrete example of a channel on which the broadcast wave processors A21, B22 and C23 are instructed to execute a processing such as channel selection by the channel selection control processing executed by the signal processor 40 described with reference to FIG. 1 will be described by using FIG. 4.

FIG. 4 is a schematic view showing the concrete example of the channel on which the broadcast wave processors A21, B22 and C23 are instructed to execute a processing such as channel selection by the channel selection control processing executed by the signal processor 40 described with reference to FIG. 1.

The channel order information stored in the memory 61 is set so that channel number "1" is succeeded by channel number "2" and channel number "1" is preceded by channel number "12". Conversely, according to this channel order information, channel number "12" is succeeded by channel number "1". Moreover, as this channel order information, the ascending channel order is set such that channel number "2" is succeeded by "3", "4", "5", ..., "10", "11" and "12". As a matter of course, as the descending order, the order of the channel numbers is opposite to the ascending order.

A case is assumed where, for example, the selection of channel number "1" is selected by the channel up key 207 or the channel down key 208 provided on the RC 99 under a condition where channel order information as described above is set. At this time, the broadcast wave processor A21 is instructed to process channel number "1" by the channel selection controller 301. Moreover, the broadcast wave processor B22 is instructed to process channel number "12" prior to channel number "1" and the broadcast wave processor C23 is instructed to process channel number "2" subsequent to channel number "1" by the channel selection controller 301. Further, the channel selection controller 301 controls the selector 302 so that the TS signal from the broadcast wave processor A21 processing channel number "1" is outputted to the TS signal processor A303.

Then, when switching of channel selection from channel number " 1" to channel number "2" is made by the channel up key 207, the broadcast wave processor A21 is instructed to continue the processing of channel number "1" by the channel selection controller 301. Likewise, the broadcast wave processor C22 is instructed to continue the processing of channel number "2". However, the broadcast wave processor B23 is instructed to process not channel number "12" prior to channel number "1" but channel number "3" subsequent to channel number "2" by the channel selection controller 301. Further, the channel selection controller 301 controls the selector 302 so that the TS signal from the broadcast wave processor C23 processing channel number "2" is outputted to the TS signal processor A303.

That is, when channel number switching in ascending order is made by the channel up key 207, the channel selection controller 301 instructs the two broadcast wave processors processing the channel number of before switching and the channel number of after switching to continue the processing. Moreover, the channel selection controller 301 instructs the broadcast wave processor processing the channel number prior to the channel number of before switching to process the channel number subsequent to the channel number of after switching. Further, the channel selection controller 301 controls the selector 302 so that the TS signal from the broadcast wave processor processing the channel number of after switching is outputted to the TS signal processor A303.

Conversely, a case is assumed where switching of channel selection from channel number "1" to channel number "12" is made by the channel down key 208 under a condition where the broadcast wave processor A21 is processing channel number "1", the broadcast wave processor B22 is processing channel number "12" and the broadcast wave processor C23 is processing channel number "2" when the above-described channel order information is set.

In this case, the broadcast wave processor A21 and the broadcast wave processor B22 are instructed to continue the processing of channel number "1" and the processing of channel number "12", respectively. However, the broadcast wave processor C23 is instructed to process not channel number "2" subsequent to channel number "1" but channel number "11" prior to channel number "12" by the channel selection controller 301. Further, the channel selection controller 301 controls the selector 302 so that the TS signal from the broadcast wave processor B22 processing channel number "12" is outputted to the TS signal processor A303.

That is, when channel number switching in descending order is selected by the channel down key 208, the channel selection controller 301 instructs the two broadcast wave processors processing the channel number of before switching and the channel number of after switching to continue the processing. Moreover, the channel selection controller 301 instructs the broadcast wave processor processing the channel number subsequent to the channel number of before switching to process the channel number prior to the channel number of after switching. Further, the channel selection controller 301 controls the selector 302 so that the TS signal from the broadcast wave processor processing the channel number of after switching is outputted to the TS signal processor A303.

In this manner, the processing on the selected channel and the processings on the two channels prior to and subsequent to the selected channel in the channel switching order are executed in parallel. When channel switching is selected by the channel up key 207 or the channel down key 208, the already processed TS signal is selected and outputted to the succeeding block. Consequently, the television receiver 10 can output the information broadcasted on a specific channel in a short time by a smaller number of hardware resources.

As described above, according to the present embodiment, based on the channel number of the channel that is selected, multiple different channels including this channel can be processed in parallel. Moreover, when switching to the subsequent to or prior to channel that is selected is made, the already processed TS signal for the switched channel is selected and outputted to the succeeding block. Since processings such as selection of the switched channel and demodulating are executed prior to switching in this way, the video and audio when channel switching is made are outputted in an extremely short time.

To output the video and audio of the selected channel, it is necessary only that decoding on the TS signal corresponding to the video and audio be performed by one system. For example, although it is possible to decode multiple TS signals from multiple broadcast wave processors in parallel by multiple decoders, since only one of the outputs from the decoders is selected, the processings and structures of the two decoders are of no use.

To selectively switch the output from the decoder, it is necessary to prepare an analog selection circuit. In audio signal switching in an analog manner, a mute circuit for noise suppression at the time of switching is necessary. In video signal switching in an analog manner, it is necessary to use an electronic part whose property in high-frequency regions is excellent. That is, to selectively switch among multiple broadcast waves, it is said to be desirable to perform it in the stage of the TS signal.

Consequently, the television receiver 10 according to the embodiment can output the information broadcasted on a specific channel in a short time by a smaller number of hardware resources.

While certain embodiments have been described, these embodiments have been presented by way of example only, and are not intended to limit the scope of the invention. Indeed, the novel apparatus and method described herein, may be embodied in a variety of other forms; furthermore, various omissions, substitutions and changes in the form of the apparatus and method described herein may be made without departing from the sprit of the invention. The accompanying claims and their equivalents are intended to cover such forms or modifications as would fall within the scope and sprit of the invention.

## Claims

1. A broadcast wave receiving apparatus comprising:
a first broadcast wave processor configured to process a broadcast wave of a channel;
a second broadcast wave processor configured to process a broadcast wave of a channel different from the channel of the first broadcast wave processor;
a third broadcast wave processor configured to process a broadcast wave of a channel different from the channels of the first and second broadcast wave processors;
a decoder configured to decode video and audio information related to the broadcast wave processed by one of the first to third broadcast wave processors; and
a controller configured to control the first to third broadcast wave processors to operate in a cooperative mode in which the first broadcast wave processor processes a broadcast wave of a first channel and the decoder decodes video and audio information of the first channel processed by the first broadcast wave processor, while the second broadcast wave processor processes a broadcast wave of a second channel that is subsequent to the first channel in a certain channel order, and while the third broadcast wave processor processes a broadcast wave of a third channel that is prior to the first channel in the certain channel order.

2. The apparatus of claim 1 further comprising:
a recording module configured to record video and audio information related to the broadcast wave processed by one of the first to third broadcast wave processors,
wherein the controller is configured to control the first to third broadcast wave processors to operate in the cooperative mode when the recording module does not record the video and audio information.

3. The apparatus of claim 1 or 2, wherein the controller is configured to control the first to third broadcast wave processors to operate in a cooperative mode in which the second broadcast wave processor continues the processing of the second channel and the decoder decodes video and audio information of the second channel processed by the second broadcast wave processor, while the first broadcast wave processor continues the processing of the first channel and while the third broadcast wave processor processes a broadcast wave of a fourth channel that is subsequent to the second channel in the certain channel order.

4. The apparatus of one of claims 1 to 3, wherein the controller is configured to control the first to third broadcast wave processors to operate in a cooperative mode in which the third broadcast wave processor continues the processing of the third channel and the decoder decodes video and audio information of the third channel processed by the third broadcast wave processor, while the first broadcast wave processor continues the processing of the first channel, and while the second broadcast wave processor processes a broadcast wave of a fifth channel that is prior to the third channel in the certain channel order.

5. The apparatus of one of claims 1 to 4 further comprising:
a storage configured to store information related to the certain channel order.

6. A broadcast wave processing method comprising:
processing a broadcast wave of a first channel;
processing a broadcast wave of a second channel different from the first channel;
processing a broadcast wave of a third channel different from the first and second channels;
decoding video and audio information related to the broadcast wave of one of the first to third channels; and
controlling in a cooperative mode in which the broadcast wave of the first channel is processed and video and audio information of the first channel is decoded, while the broadcast wave of the second channel that is subsequent to the first channel in a certain channel order is processed, and while the broadcast wave of the third channel that is prior to the first channel in the certain channel order is processed.
